# FASCICULE DE BREVET EUROPEEN

(11) **EP 2 101 097 B1**
(45) Date de publication et mention de la délivrance du brevet: **30.11.2011**
(21) Numéro de dépôt: 09290168.5
(22) Date de dépôt: 09.03.2009
(51) Int. Cl.: F16L 37/088

(54) **Dispositif de raccordement pour transfert de fluide, circuit l'incorporant et son procédé de montage/démontage**
Anschlussvorrichtung für den Transfer eines Fluids, Kreislauf, der diese Vorrichtung umfasst, und entsprechendes Montage-/Demontageverfahren
Connection device for fluid transfer, circuit including said device and assembly/disassembly method thereof

(30) Priorité: 12.03.2008 FR 0801340
(43) Date de publication de la demande: 16.09.2009
(73) Titulaire: Hutchinson, 75008 Paris (FR)
(72) Inventeur: Godeau, Denis, 45260 Vieilles Maisons (FR); Milanini, Luc, 45120 Corquilleroy (FR); Ully, Stéphane, 45210 Fontenay sur Loing (FR)
(74) Mandataire: Bolinches, Michel Jean-Marie

(56) Documents cités:
- EP-A- 0 140 995
- EP-A- 1 158 236
- WO-A-2005/059426
- FR-A- 2 795 156
- SU-A1- 1 665 161

## Description

La présente invention concerne un dispositif de raccordement pour une ligne de transfert de fluide, un circuit d'injecteur de carburant l'incorporant, et un procédé de montage/ démontage de ce dispositif autour d'un embout tubulaire mâle et dans un embout tubulaire femelle de ce dispositif à raccorder à cet embout mâle. L'invention s'applique d'une manière générale à tous raccordements entre de tels embouts transférant un fluide en particulier à basse pression et notamment à des rampes d'injection de carburant pour véhicules à moteur.

D'une manière générale, il est connu pour les rampes d'injection de carburant d'utiliser des dispositifs de raccordement à embout mâle venant s'emmancher d'une manière étanche dans un embout femelle, au moyen d'une gorge ou saillie radiale de raccordement qui est formée sur l'embout mâle et grâce à laquelle on vient positionner axialement l'embout femelle autour de l'embout mâle via un moyen de maintien.

Comme par exemple décrit dans le document WO-A-2004/106799, ce moyen de maintien peut être formé d'une épingle ou agrafe en « U » que l'on vient insérer à la fois autour de l'embout femelle par son âme et dans la gorge de l'embout mâle par ses deux ailes déformables, à travers deux lumières en arc de cercle formées dans cet embout femelle, pour que ce dernier soit maintenu en position autour de l'embout mâle.

En variante et comme décrit dans le document WO-A-2005/059426, ce moyen de maintien peut être formé d'une bague qui est montée mobile axialement autour de l'embout femelle, lequel a son extrémité axialement inférieure logée dans la gorge de l'embout mâle. Cette bague est conçue pour empêcher réversiblement, dans une position de verrouillage de l'embout femelle dans cette gorge, la déformation radiale de lames élastiques formées dans l'embout femelle par des entailles axiales s'étendant à partir de l'extrémité inférieure de cet embout.

Un inconvénient majeur de ces dispositifs de raccordement connus est qu'ils ne garantissent pas le verrouillage de l'embout mâle dans l'embout femelle forcément dans la position souhaitée, i.e. en s'assurant que la portion à loger dans la gorge de raccordement de l'embout mâle soit correctement positionnée dans cette gorge, préalablement à son verrouillage dans cette position.

Le document EP-A-140 995 présente un dispositif de raccordement selon le préambule de la revendication 1 annexée à la présente description, dont le moyen de positionnement dans la gorge de l'embout mâle est constitué de plusieurs tiges en T solidaires d'une bague. Plus précisément, le sommet de chaque T vient traverser une lumière de l'embout femelle et est plaqué dans celle-ci en position verrouillée via une dent de verrouillage coopérant avec un ressort. Un inconvénient de ce dispositif réside notamment dans la complexité de sa structure et donc dans son coût relativement élevé.

Un but de la présente invention est de proposer un dispositif de raccordement pour une ligne de transfert de fluide en particulier à basse pression qui remédie à ces inconvénients, ce dispositif comprenant :
- un embout femelle, qui est destiné à recevoir d'une manière étanche un embout mâle présentant une gorge périphérique de raccordement et qui présente au moins une lumière traversante,
- un moyen déformable de positionnement qui est conçu pour être monté sur l'embout femelle à travers la ou chaque lumière et qui est apte à venir se loger dans la gorge de sorte à positionner axialement l'embout mâle à l'intérieur de l'embout femelle, et
- un organe de verrouillage dudit moyen dans la gorge qui est apte à être monté mobile en translation autour de l'embout femelle en passant réversiblement d'une position non verrouillée où ce moyen est libre de se déformer radialement vers l'extérieur de la gorge, à une position verrouillée où ledit organe se trouve au moins partiellement en regard dudit moyen de sorte qu'il s'oppose à la déformation de ce dernier radialement vers l'extérieur de la gorge.

A cet effet, un dispositif selon l'invention est tel que ledit moyen de positionnement est constitué d'une épingle en forme de « U » présentant deux ailes déformables qui forment respectivement deux portions traversantes aptes à traverser une paire desdites lumières diamétralement opposées et qui sont reliées entre elles par une âme destinée à être montée radialement à l'extérieur de l'embout femelle, et en ce que ledit organe de verrouillage vient recouvrir lesdites ailes dans la position verrouillée en fermant ces lumières.

On notera que ce dispositif permet de n'autoriser l'opération de verrouillage que dans le cas de la validation de la mise en place de ce moyen de positionnement dans la gorge de raccordement de l'embout mâle, laquelle mise en place est stable et conçue pour résister à des pressions élevées, ce qui revient à disposer par des moyens techniquement simples et fiables d'un « double verrouillage » de l'embout femelle sur l'embout mâle. On dispose ainsi d'un degré de sécurité supplémentaire par rapport à l'état de l'art antérieur, où la validation de ce positionnement n'était pas requise préalablement au verrouillage.

On notera également que l'organe de verrouillage est apte à fermer complètement la ou chaque lumière en lui faisant écran dans cette position verrouillée où il se situe axialement en regard du moyen de positionnement, et à libérer à nouveau partiellement la ou chaque lumière en retrouvant par coulissement sa position initiale non verrouillée.

Selon une autre caractéristique de l'invention, ledit organe de verrouillage comporte avantageusement une ou plusieurs extrémité(s) axiale(s) de verrouillage qui est (sont) respectivement adaptée(s) pour venir recouvrir dans ladite position verrouillée une ou plusieurs portion(s) traversante(s) déformable(s) dudit moyen de positionnement destinée(s) à traverser ladite ou lesdites lumière(s).

Avantageusement, ledit organe de verrouillage est formé d'un manchon qui est destiné à enserrer radialement l'embout femelle et qui comporte au moins une extrémité de manoeuvre axialement opposée à ladite ou chaque extrémité de verrouillage et formant une surface d'appui manoeuvrable pour faire coulisser réversiblement ledit organe autour de l'embout femelle. De préférence, ledit organe de verrouillage peut comporter deux surfaces d'appui diamétralement opposées qui s'étendent perpendiculairement à l'axe de symétrie dudit organe de verrouillage.

On notera que ces surfaces d'appui peuvent ainsi présenter chacune une superficie importante facilitant pour l'opérateur le verrouillage/ déverrouillage manuel de l'embout femelle sur l'embout mâle.

Avantageusement, ledit manchon peut être pourvu, en saillie sur la face radialement interne de ladite ou chaque extrémité de verrouillage, d'une pluralité de plots adaptés pour empêcher le recouvrement par ce manchon de ladite ou chaque portion traversante dudit moyen de positionnement, en cas de positionnement de ce dernier hors de ladite gorge.

Selon un exemple préférentiel de réalisation de l'invention, ladite épingle en « U », de préférence en matière plastique, coopère avec lesdites deux lumières qui sont en arc de cercle et sont de préférence formées à proximité immédiate du bord axialement inférieur d'un tronçon cylindrique inférieur de l'embout femelle.

Avantageusement, chacune de ces ailes peut présenter, sur sa face interne située en regard de l'autre aile, une excroissance conçue pour s'emboîter dans l'une des deux lumières par au moins un épaulement inférieur que présente cette lumière, de sorte à former une cale de blocage des ailes dans la gorge s'opposant à une translation de chaque aile selon la direction de sa longueur.

On notera que le resserrement mutuel des ailes déformables de l'épingle dans les lumières les recevant de l'embout femelle, resserrement qui se produit lorsque ces ailes parviennent dans la gorge de l'embout mâle suite au coulissement relatif de ce dernier dans l'embout femelle, se traduit par un clipsage de l'épingle dans la gorge qui informe de manière fiable l'opérateur que l'épingle, et donc l'embout femelle, ont été correctement connectées à l'embout mâle.

Selon un mode de réalisation de l'invention, ledit organe de verrouillage peut comprendre deux extrémités de verrouillage diamétralement opposées et respectivement constituées par deux pattes axiales destinées à être positionnées contre lesdites ailes de l'épingle et formant sensiblement des créneaux avec le contour adjacent dudit organe. Quant audit organe de verrouillage, il est avantageusement conçu pour être monté immobile en rotation autour de l'embout femelle, dans ladite position verrouillée.

Selon une autre caractéristique de l'invention, l'embout femelle peut comporter deux raccords de branchement, de préférence en forme de queues de sapin, qui s'étendent de part et d'autre d'une surface d'appui centrale de l'embout femelle en vue de sa manoeuvre et perpendiculairement à l'axe de symétrie de cet embout.

Avantageusement, lesdites deux surfaces d'appui dudit organe de verrouillage peuvent être reliées entre elles par deux encoches axiales respectivement destinées à se trouver en dessous desdits deux raccords de l'embout femelle, dans lesdites positions non verrouillée et verrouillée.

Selon un autre aspect de l'invention, le dispositif de raccordement incorpore également l'embout mâle dans la gorge duquel est monté ledit moyen de positionnement, cette gorge étant délimitée par un chanfrein tronconique qui relie axialement entre eux un tronçon cylindrique axialement inférieur à un tronçon cylindrique axialement supérieur de diamètre maximal pour l'embout mâle.

Selon une autre caractéristique avantageuse de l'invention, l'organe de verrouillage peut incorporer en outre un témoin visuel de verrouillage qui est respectivement visible et invisible sur l'embout femelle dans les positions non verrouillée et de verrouillage et qui comporte de préférence au moins un pion axial formé d'un seul tenant avec l'organe de verrouillage et mobile en translation à l'intérieur d'un logement de l'embout femelle débouchant sur une surface d'appui de cet embout.

Un circuit d'injecteur de carburant selon l'invention comporte un embout tubulaire mâle et un dispositif de raccordement le raccordant à un embout tubulaire femelle de ce dispositif, lequel est tel que défini précédemment.

Le procédé de montage/ démontage selon l'invention d'un dispositif de raccordement tel que défini ci-dessus autour d'un embout tubulaire mâle à raccorder à un embout tubulaire femelle de ce dispositif par l'intermédiaire d'une gorge de raccordement formée dans cet embout mâle, comprend les étapes successives suivantes pour le montage du dispositif :
a) on monte ledit organe de verrouillage puis l'épingle formant ledit moyen de positionnement autour de l'embout femelle, de manière que ce moyen traverse lesdites lumières de l'embout femelle,
b) on insère l'embout mâle dans l'embout femelle ainsi équipé du dispositif de raccordement, de telle manière que ledit moyen se déforme radialement au cours de son coulissement relatif sur l'embout mâle pour venir se loger dans la gorge, ledit organe de verrouillage occupant pendant ce coulissement ladite position non verrouillée où ledit moyen est libre de se déformer radialement vers l'extérieur de la gorge, puis
c) on exerce une poussée sur ledit organe, de telle manière qu'il occupe ladite position verrouillée où il recouvre au moins partiellement ledit moyen en fermant lesdites lumières et en s'opposant ainsi à la déformation de ce dernier radialement vers l'extérieur de la gorge.

On notera que le coulissement mis en oeuvre à cette étape b) a pour résultat une déformation radialement vers l'intérieur du moyen de positionnement à son arrivée dans la gorge, qui se traduit avantageusement par un clipsage informant de manière fiable l'opérateur que ce moyen a été correctement positionné sur l'embout mâle.

De préférence, les deux ailes de cette épingle en forme de « U », de préférence en matière plastique, viennent se loger dans ladite gorge à l'étape b) après s'être déformées radialement lors dudit coulissement, alors que ladite âme est montée radialement à l'extérieur de l'embout femelle.

Avantageusement, l'on vient emboîter à l'étape b) des excroissances internes et en regard que présentent respectivement lesdites ailes de l'épingle dans des épaulements inférieurs desdites lumières, pour s'opposer à la déformation radialement vers l'extérieur de ces ailes.

Egalement à titre préférentiel, on met en oeuvre l'étape c) en exerçant ladite poussée sur deux surfaces d'appui formées en des extrémités supérieures de manoeuvre dudit organe de verrouillage, qui sont diamétralement opposées et qui s'étendent perpendiculairement à l'axe de symétrie dudit organe de verrouillage.

Avantageusement, l'on recouvre sélectivement à l'étape c) lesdites ailes par deux pattes axiales diamétralement opposées formant des extrémités inférieures de verrouillage dudit organe qui sont opposées auxdites extrémités de manoeuvre.

Selon une autre caractéristique de l'invention, l'on démonte le dispositif essentiellement en mettant en oeuvre les étapes suivantes :
d) on exerce une traction sur l'organe de verrouillage pour le faire passer de ladite position verrouillée à ladite position non verrouillée, puis
e) on déloge ledit moyen de positionnement de ladite gorge par un coulissement relatif de l'embout mâle à l'intérieur de l'embout femelle, autorisé par la liberté de déformation radialement vers l'extérieur dudit moyen de positionnement obtenue à l'étape d).

On notera que cette épingle de positionnement et l'organe de verrouillage selon l'invention l'entourant présentent l'avantage d'être « imperdables » une fois montés sur l'embout femelle, grâce auxdites cales de blocage radial de l'épingle qui sont formées sur la face interne de ses ailes et qui viennent enserrer la gorge de l'embout mâle à travers la lumière correspondante de l'embout femelle en s'opposant à la translation de chaque aile dans la direction de sa longueur.

D'autres caractéristiques, avantages et détails de la présente invention ressortiront à la lecture de la description suivante de plusieurs exemples de réalisation de l'invention, donnés à titre illustratif et non limitatif, ladite description étant réalisée en référence avec les dessins joints, parmi lesquels :
la figure 1 est une vue schématique partielle en coupe axiale, dans le plan I-I de la figure 4, d'un dispositif de raccordement selon un exemple préférentiel de l'invention monté sur un embout mâle de type connu dans une phase initiale de non-positionnement du dispositif dans la gorge de raccordement de cet embout,
la figure 2 est une vue schématique partielle en coupe axiale du dispositif de la figure 1 monté sur l'embout mâle dans une phase finale de positionnement et de verrouillage du dispositif dans la gorge de cet embout,
la figure 3 est une vue en perspective d'un embout femelle selon l'invention destiné à recevoir cet embout mâle et inclus dans le dispositif des figures 1 et 2,
la figure 4 est une vue en perspective d'un moyen de positionnement selon l'invention de l'embout mâle dans l'embout femelle, destiné à être monté autour et à travers de l'embout femelle de la figure 3 et inclus dans le dispositif des figures 1 et 2,
la figure 5 est une vue en perspective d'un organe de verrouillage selon l'invention destiné à être monté autour de l'embout femelle de la figure 3 et également inclus dans le dispositif des figures 1 et 2,
la figure 6 est une vue en coupe axiale, dans le plan VIa-VIa de la figure 3 et dans le plan VIb-VIb de la figure 4, illustrant une position non verrouillée de l'organe de verrouillage de la figure 5 autour de l'embout femelle de la figure 3 pourvu du moyen de positionnement de la figure 4,
la figure 7 est une vue en coupe axiale dans le même plan de coupe que la figure 6, mais illustrant une position verrouillée de l'organe de verrouillage autour de l'embout femelle pourvu du même moyen de positionnement,
la figure 8 est une vue en perspective d'un dispositif de raccordement selon un autre exemple de l'invention et montré en position non verrouillée, où l'embout femelle et l'organe de verrouillage correspondent à une variante des figures 1 à 7,
la figure 9 est une vue en coupe axiale selon le plan IX-IX de la figure 8 de ce dispositif de raccordement en position non verrouillée,
la figure 10 est une vue en perspective du dispositif de raccordement de la figure 8 montré en position verrouillée, et
la figure 11 est une vue en coupe axiale selon le plan XI-XI de la figure 10 de ce dispositif de raccordement en position verrouillée.

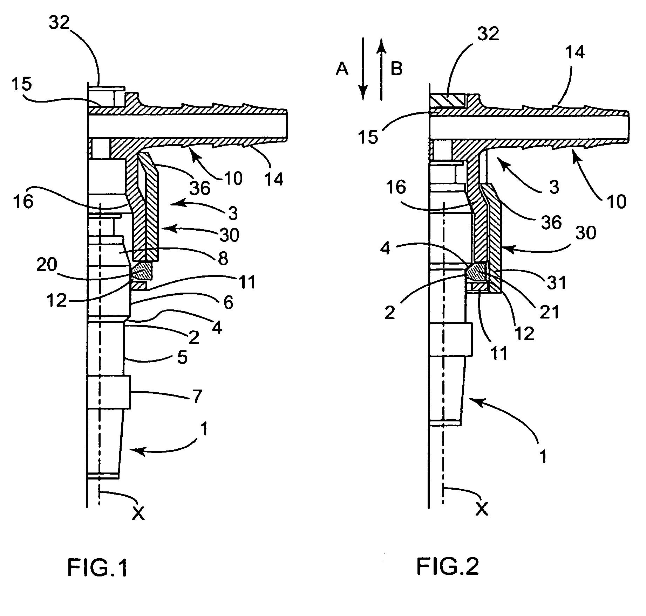

L'embout tubulaire mâle 1 visible aux figures 1 et 2 présente une forme standard avec une gorge périphérique de raccordement 2 qui est destinée à recevoir un dispositif de raccordement 3 selon l'invention. Cette gorge 2 est délimitée par un chanfrein tronconique 4 qui fait un angle d'environ 50° avec l'axe X de l'embout mâle 1 et qui relie axialement entre eux un tronçon cylindrique axialement inférieur 5 à un tronçon cylindrique axialement supérieur 6 de diamètre maximal pour l'embout mâle 1. Le tronçon cylindrique inférieur 5 se prolonge vers le bas par une collerette 7, et le tronçon cylindrique supérieur 6 se prolonge vers le haut par un tronçon tronconique 8 formant rampe de guidage pour le dispositif de raccordement 3 et faisant un angle d'environ 20° avec l'axe X.

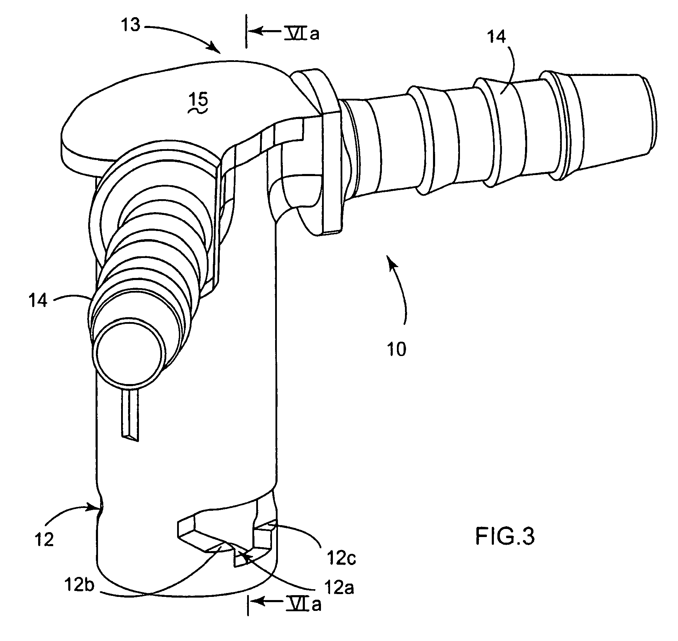

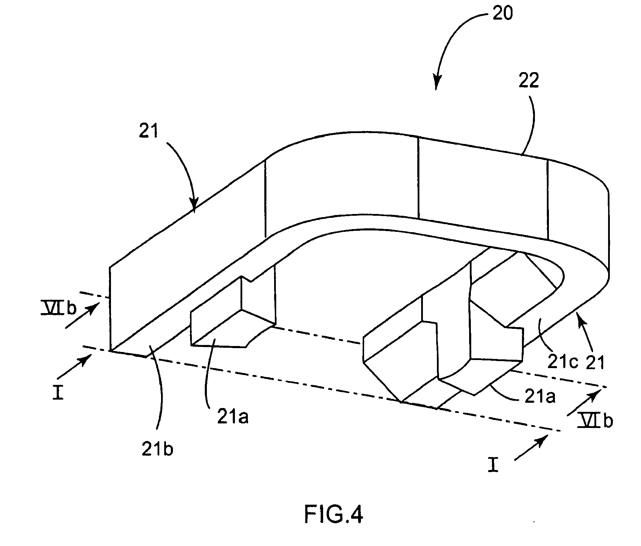

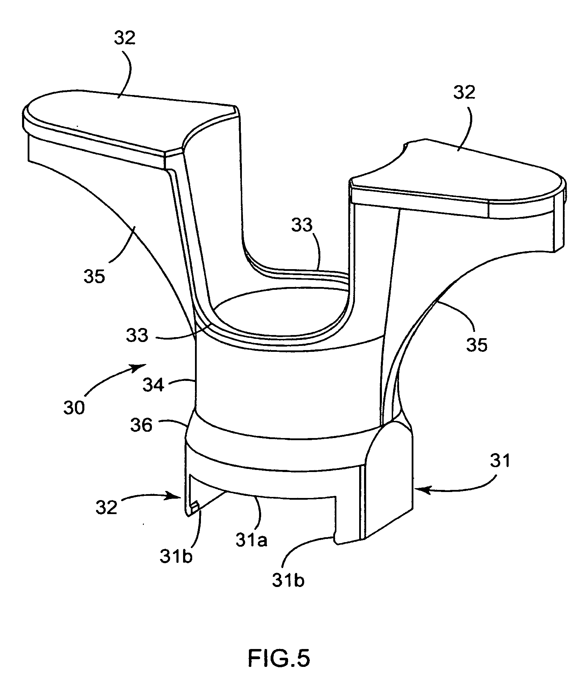

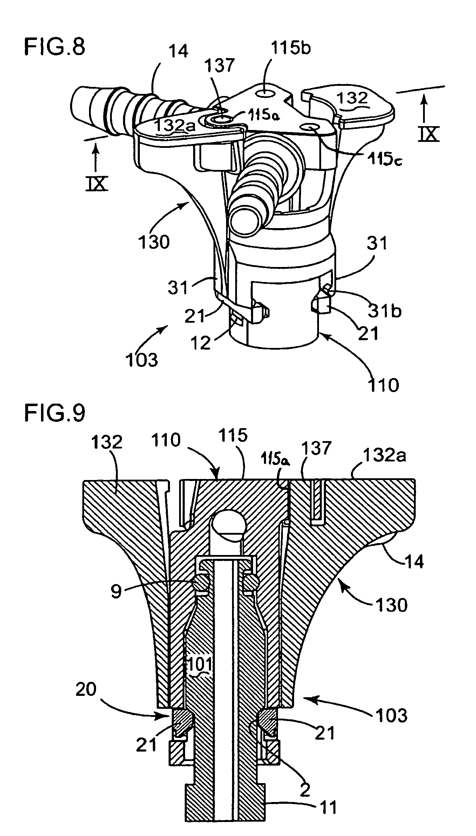

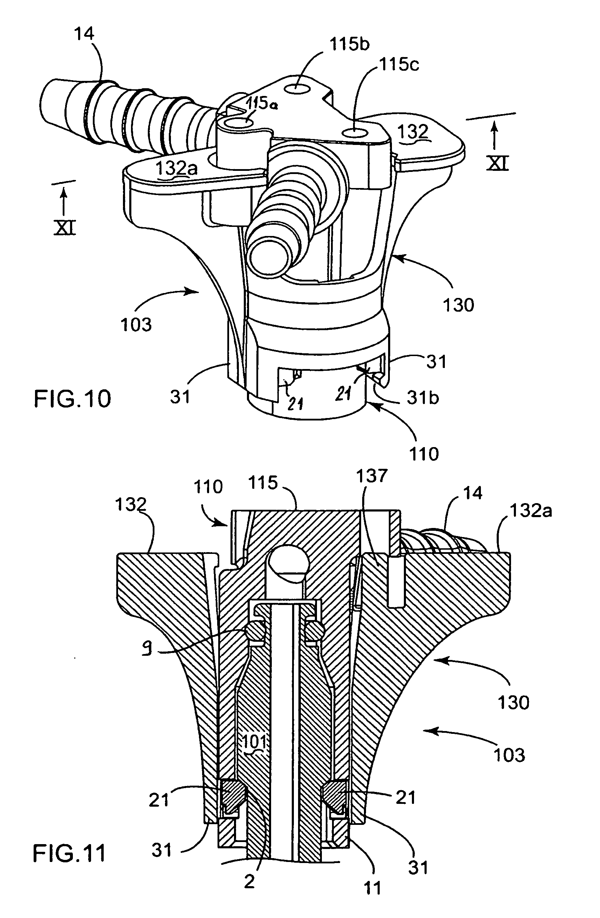

Le dispositif de raccordement 3 selon l'exemple de l'invention illustré à la figure 1 comprend :
- un embout tubulaire femelle 10, qui est destiné à recevoir d'une manière étanche l'embout mâle 1 (i.e. via l'interposition entre l'embout mâle 1 et l'embout femelle 10 d'un joint d'étanchéité 9, tel qu'un joint torique, seulement visible aux variantes des figures 9 et 11) et qui présente à proximité immédiate de son bord inférieur 11 deux lumières traversantes 12 diamétralement opposées et chacune en arc de cercle le long d'une section circonférentielle de cet embout 10 (voir figure 3),
- un moyen déformable de positionnement 20 formé d'une épingle en matière plastique et en forme de « U » (voir figure 4), présentant deux ailes déformables 21 qui sont respectivement montées traversantes dans les lumières 12 et qui sont reliées entre elles par une âme 22 montée radialement à l'extérieur de l'embout femelle 10, cette épingle 20 étant destinée à venir se loger dans la gorge 2 de sorte à positionner axialement l'embout mâle 1 à l'intérieur de l'embout femelle 10, et
- un organe de verrouillage 30 de l'épingle 20 dans la gorge 2 formé d'un manchon globalement tubulaire en matière plastique qui est monté coulissant autour de l'embout femelle 10 et qui comporte deux pattes axialement inférieures de verrouillage 31 (voir figure 5) diamétralement opposées formant des créneaux avec le contour inférieur adjacent 31a de l'organe 30 et respectivement adaptées pour venir recouvrir réversiblement, dans la position verrouillée de raccordement illustrée aux figures 3 et 4, les deux ailes 21 de l'épingle 20 en fermant les lumières 12 traversées par ces dernières, de sorte que ces pattes 31 s'opposent à la déformation de ces deux ailes 21 radialement vers l'extérieur de la gorge 2.

Plus précisément, l'embout tubulaire femelle 10 tel qu'illustré à la figure 3 présente de manière connue, en son extrémité axialement supérieure 13, deux raccords de branchement 14 en forme de queues de sapin qui s'étendent de part et d'autre d'une surface d'appui 15 pour l'opérateur que présente cet embout 10 et qui est centrée sur l'axe X. Quant à chacune des deux lumières 12 formées dans la partie axialement inférieure de l'embout 10, elle présente sensiblement une forme de « T » dont le sommet horizontal en arc de cercle se prolonge vers le bas par un logement 12a qui est relié à ce sommet par deux épaulements 12b et 12c et qui est conçu pour recevoir l'une des deux excroissances 21 a respectivement formées sur les deux ailes 21 de l'épingle 20, pour bloquer ces ailes 21 dans la gorge 2 en s'opposant à leur translation dans la direction de leur longueur.

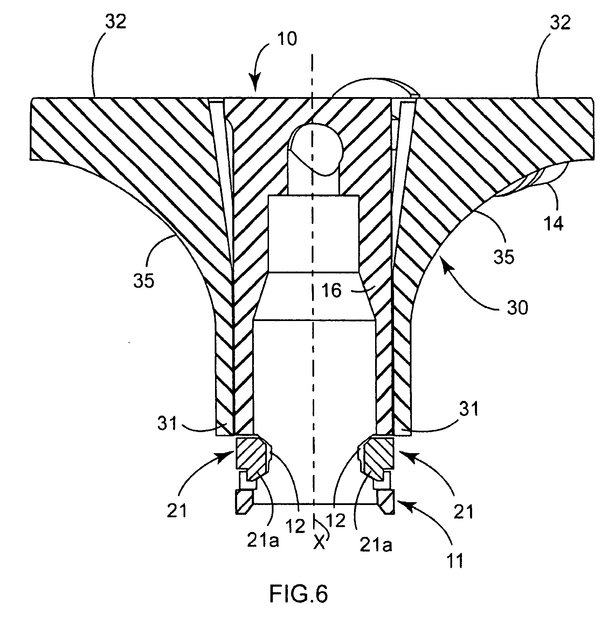

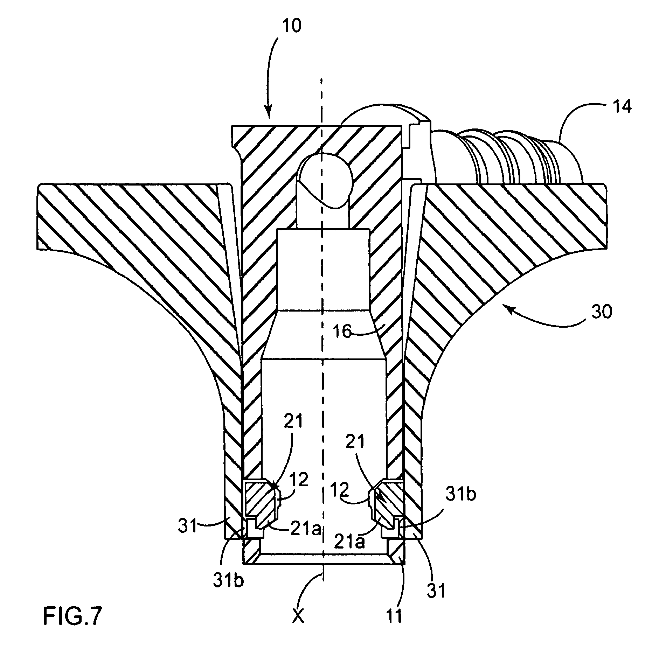

Ces excroissances 21a formant cales radiales sont visibles à la figure 4, et elles forment chacune un bloc prismatique qui épouse à la fois la face inférieure 21 b et une face latérale oblique 21 c de chaque aile 21. Dans cet exemple de réalisation, chaque excroissance 21 a présente une section pentagonale concave dont les deux faces définissant cette concavité épousent respectivement ces faces 21 b et 21 c en formant entre elles un angle obtus. Les figures 6 et 7 montrent également en coupe ces excroissances 21a qui sont formées d'un seul tenant avec les ailes 21 qui les portent.

Comme illustré à la figure 5, l'organe de verrouillage 30 comporte, pour passer réversiblement par coulissement manuel de la position verrouillée des figures 2 et 7 à la position non verrouillée de la figure 6 où les pattes de verrouillage 31 ne ferment pas les lumières 12 et donc où elles autorisent la déformation radialement vers l'extérieur des ailes 21 de l'épingle 20, deux extrémités de manoeuvre 32 axialement opposées à ces pattes de verrouillage 31 et formant deux surfaces d'appui qui sont diamétralement opposées et perpendiculaires à l'axe X et qui sont reliées entre elles par deux encoches axiales 33 respectivement destinées à toujours se trouver en dessous des deux raccords 14 de l'embout femelle 10, dans les positions non verrouillée et verrouillée.

L'organe de verrouillage 30 selon l'invention peut avantageusement présenter une portion axialement supérieure 34 globalement cylindrique, qui est munie d'ailettes axiales 35 diamétralement opposées supportant les surfaces d'appui 32 en l'extrémité axialement supérieure de l'organe 30 et qui est reliée aux pattes axiales de verrouillage 31 par un chanfrein tronconique 36 destiné à épouser une portion tronconique similaire 16 (visible à la figure 1) de l'embout femelle 10, elle-même conçue pour recouvrir le tronçon tronconique 8 de l'embout mâle 1. Chacune des pattes de verrouillage 31 comporte avantageusement une paire de plots 31 b en ses deux extrémités inférieures qui sont conçus pour empêcher le recouvrement de l'aile 21 correspondante de l'épingle 20 par l'organe 30, en cas de positionnement de cette dernière hors de la gorge 2.

Pour connecter en position verrouillée le dispositif de raccordement 3 selon l'invention dans la gorge de raccordement 2 de l'embout mâle 1, on procède comme suit :

On commence par monter l'organe de verrouillage 30 puis l'épingle de positionnement 20 autour de l'embout femelle 10, de manière que l'épingle 20 traverse les deux lumières 12 et que les pattes de verrouillage 31 de l'organe 30 soient situées en contre-haut des ailes 21 de l'épingle 20 (voir figure 6). On insère ensuite par coulissement l'embout mâle 1 dans l'embout femelle 10 ainsi équipé en appuyant sur la surface d'appui centrale 15 de ce dernier, ce qui a pour effet de déformer ces ailes 21 radialement vers l'extérieur, comme visible à la figure 1.

En poursuivant l'insertion par coulissement de l'embout mâle 1 dans l'embout femelle 10, on provoque le positionnement par clipsage de l'épingle 20 dans la gorge 2 (i.e. immédiatement en dessous du chanfrein 4) par un resserrement radial de ses ailes 21, l'organe de verrouillage 30 occupant toujours la position non verrouillée où il autorise la déformation de l'épingle 20 radialement vers l'extérieur. Ce clipsage informe clairement l'opérateur que l'épingle 20, et donc l'embout femelle 10, ont été correctement connectées à l'embout mâle 1.

Pour verrouiller cette connexion, on exerce ensuite une poussée sur les deux surfaces d'appui latérales 32 de l'organe de verrouillage 30 (voir flèche A à la figure 2), pour qu'il occupe la position verrouillée illustrée aux figures 2 et 7 où les pattes de verrouillage 31 recouvrent respectivement les ailes 21 de l'épingle 20 en fermant complètement les lumières 12 de l'embout femelle 10. Il en résulte que l'organe 30 s'oppose alors à la déformation des ailes 21 radialement vers l'extérieur de la gorge 2, garantissant ainsi le verrouillage de l'embout femelle 10 dans cette gorge 2.

Pour déverrouiller cette connexion, on commence par exercer une traction sur les surfaces d'appui 32 de l'organe de verrouillage 30 (voir flèche B à la figure 2) pour le faire passer de cette position verrouillée à une position non verrouillée. Quant à l'extraction de l'épingle 20 et donc de l'embout femelle 10 hors de la gorge 2 de l'embout mâle 1, on la réalise par un coulissement ultérieur de cet embout mâle 1 vers l'extérieur de l'embout femelle 10, autorisé par la liberté de déformation radialement vers l'extérieur de l'épingle 20 ayant été à nouveau obtenue du fait du déverrouillage de l'organe 30.

On notera que ce déverrouillage ne nécessite pas de manipulation de l'épingle 20 par l'opérateur pour déloger celle-ci - et donc l'embout femelle - de la gorge 2, du fait que c'est le coulissement relatif de l'embout mâle 1 et de l'embout femelle 10 qui déclenche automatiquement ce délogement.

Le dispositif de raccordement 103 illustré selon la variante des figures 8 à 11 se différencie essentiellement de celui présenté ci-dessus, en ce que l'organe de verrouillage 130 incorpore un témoin visuel de verrouillage 137, qui est :
- visible sur l'embout femelle 110 dans la position non verrouillée sur l'embout mâle 101 des figures 8 et 9, et
- invisible sur l'embout femelle 110 dans la position de verrouillage des figures 10 et 11 et qui est constitué dans cet exemple d'un pion axial 137 formé d'un seul tenant avec l'organe 130 de manière adjacente à l'une 132a des deux surfaces d'appui 132, 132a de cet organe 130 et radialement à l'intérieur de cette surface 132a.

Comme cela est visible aux figures 9 et 11, ce pion 137 est mobile en translation axiale en même temps que l'organe 130 à l'intérieur d'un logement axial traversant 115a de l'embout femelle 110 qui débouche sur sa surface d'appui 115. Dans cet exemple illustré, trois logements axiaux identiques 115a, 115b et 115c sont formés de manière traversante sur cette surface d'appui 115, correspondant à diverses positions angulaires de l'organe de verrouillage 130.

On notera que le pion 137 de visualisation du verrouillage présente avantageusement une couleur très différente de celle de l'embout femelle 110, ce contraste facilitant la visualisation par un opérateur de la position déverrouillée où ce pion 137 affleure à la surface d'appui 115 de cet embout 110 (voir figure 8). Dans la position de verrouillage visible aux figures 10 et 11 qui est obtenue en appuyant vers le bas sur l'organe 130, le pion 137 est enfoncé (i.e. en retrait axialement vers l'intérieur) par rapport à cette surface 115.

## Revendications

1. Dispositif de raccordement (3, 103) pour une ligne de transfert de fluide en particulier à basse pression, comprenant :
- un embout femelle (10, 110), qui est destiné à recevoir d'une manière étanche un embout mâle (1, 101) présentant une gorge périphérique de raccordement (2) et qui présente au moins une lumière traversante (12),
- un moyen déformable de positionnement (20) qui est conçu pour être monté sur l'embout femelle à travers la ou chaque lumière et qui est apte à venir se loger dans la gorge de sorte à positionner axialement l'embout mâle à l'intérieur de l'embout femelle, et
- un organe de verrouillage (30, 130) dudit moyen dans la gorge qui est apte à être monté mobile en translation autour de l'embout femelle en passant réversiblement d'une position non verrouillée où ledit moyen est libre de se déformer radialement vers l'extérieur de la gorge, à une position verrouillée où ledit organe se trouve au moins partiellement en regard dudit moyen de sorte qu'il s'oppose à la déformation de ce dernier radialement vers l'extérieur de la gorge,
**caractérisé en ce que** ledit moyen de positionnement est constitué d'une épingle en forme de « U » présentant deux ailes déformables (21) qui forment respectivement deux portions traversantes aptes à traverser une paire desdites lumières diamétralement opposées et qui sont reliées entre elles par une âme (22) destinée à être montée radialement à l'extérieur de l'embout femelle, et **en ce que** ledit organe de verrouillage vient recouvrir lesdites ailes dans la position verrouillée en fermant ces lumières.

2. Dispositif (3, 103) selon la revendication 1, **caractérisé en ce que** ledit organe de verrouillage (30, 130) comporte une ou plusieurs extrémité(s) axiale(s) de verrouillage (31) qui est (sont) respectivement adaptée(s) pour venir recouvrir lesdites ailes (21) dans ladite position verrouillée.

3. Dispositif (3, 103) selon la revendication 2, **caractérisé en ce que** ledit organe de verrouillage (30, 130) est formé d'un manchon qui est destiné à enserrer radialement l'embout femelle (10, 110) et qui comporte au moins une extrémité de manoeuvre (32, 132, 132a) axialement opposée à ladite ou chaque extrémité de verrouillage (31) pour faire coulisser réversiblement ledit organe autour de l'embout femelle, ledit organe comportant de préférence deux surfaces d'appui diamétralement opposées formées par ces extrémités de manoeuvre qui s'étendent perpendiculairement à l'axe de symétrie (X) de cet organe.

4. Dispositif (3, 103) selon la revendication 3, **caractérisé en ce que** ledit manchon (30) est pourvu, en saillie sur la face radialement interne de ladite ou chaque extrémité de verrouillage, d'une pluralité de plots adaptés pour empêcher le recouvrement par ce manchon de ladite ou chaque portion traversante (21) dudit moyen de positionnement (20), en cas de positionnement de ce dernier hors de ladite gorge (2).

5. Dispositif (3, 103) selon une des revendications précédentes, **caractérisé en ce que** chacune desdites ailes (21) présente, sur sa face interne située en regard de l'autre aile, une excroissance conçue pour s'emboîter dans la lumière (12) correspondante en arc de cercle par au moins un épaulement inférieur que présente cette dernière, de sorte à former une cale de blocage des ailes dans ladite gorge (2) s'opposant à une translation de chaque aile selon la direction de sa longueur, ladite épingle étant de préférence en matière plastique.

6. Dispositif (3, 103) selon une des revendications précédentes, **caractérisé en ce que** ledit organe de verrouillage (30) comprend deux extrémités de verrouillage (31) diamétralement opposées et respectivement constituées par deux pattes axiales destinées à être positionnées contre lesdites ailes (21) de l'épingle (20) et formant sensiblement des créneaux avec le contour adjacent (31 a) dudit organe.

7. Dispositif (3, 103) selon une des revendications précédentes, **caractérisé en ce que** ledit organe de verrouillage (30, 130) est conçu pour être monté immobile en rotation autour de l'embout femelle (10, 110), dans ladite position verrouillée.

8. Dispositif (3, 103) selon une des revendications précédentes, **caractérisé en ce que** l'embout femelle (10, 110) comporte deux raccords de branchement (14), de préférence en forme de queues de sapin, qui s'étendent de part et d'autre d'une surface d'appui centrale (15, 115) de l'embout femelle en vue de sa manoeuvre et perpendiculairement à l'axe de symétrie (X) de cet embout, deux surfaces d'appui (32, 132, 132a) formant des extrémités de manoeuvre dudit organe de verrouillage (30, 130) étant de préférence reliées entre elles par deux encoches axiales (33) respectivement destinées à se trouver en dessous desdits deux raccords (14) de l'embout femelle, dans lesdites positions non verrouillée et verrouillée.

9. Dispositif (3, 103) selon une des revendications précédentes, **caractérisé en ce qu'**il incorpore également l'embout mâle (1, 101) dans la gorge (2) duquel est monté ledit moyen de positionnement (20), cette gorge étant délimitée par un chanfrein tronconique (4) qui relie axialement entre eux un tronçon cylindrique axialement inférieur (5) à un tronçon cylindrique axialement supérieur (6) de diamètre maximal pour l'embout mâle.

10. Dispositif de raccordement selon une des revendications précédentes, **caractérisée en ce que** l'organe de verrouillage (130) incorpore en outre un témoin visuel de verrouillage (137) qui est respectivement visible et invisible sur l'embout femelle (110) dans les positions non verrouillée et de verrouillage et qui comporte de préférence au moins un pion axial (137) formé d'un seul tenant avec l'organe de verrouillage et mobile en translation à l'intérieur d'un logement (115a) de l'embout femelle débouchant sur une surface d'appui (115) de cet embout.

11. Circuit d'injecteur de carburant comportant un embout tubulaire mâle (1) et un dispositif de raccordement (3) le raccordant à un embout tubulaire femelle (10) de ce dispositif, **caractérisé en ce que** ce dispositif est tel que défini à l'une des revendications précédentes.

12. Procédé de montage/ démontage d'un dispositif de raccordement (3) selon une des revendications 1 à 10 autour d'un embout tubulaire mâle (1) à raccorder à un embout tubulaire femelle (10) de ce dispositif par l'intermédiaire d'une gorge de raccordement (2) formée dans cet embout mâle, **caractérisé en ce qu'**il comprend les étapes successives suivantes pour le montage du dispositif :
a) on monte ledit organe de verrouillage (30) puis l'épingle formant ledit moyen de positionnement (20) autour de l'embout femelle, de manière que ce moyen traverse lesdites lumières (12) de l'embout femelle,
b) on insère l'embout mâle dans l'embout femelle ainsi équipé du dispositif de raccordement, de telle manière que ledit moyen se déforme radialement au cours de son coulissement relatif sur l'embout mâle pour venir se loger dans la gorge, ledit organe de verrouillage occupant pendant ce coulissement ladite position non verrouillée où ledit moyen est libre de se déformer radialement vers l'extérieur de la gorge, puis
c) on exerce une poussée sur ledit organe, de telle manière qu'il occupe ladite position verrouillée où il recouvre au moins partiellement ledit moyen en fermant lesdites lumières et en s'opposant ainsi à la déformation de ce dernier radicalement vers l'extérieur de la gorge.

13. Procédé selon la revendication 12, **caractérisé en ce que** lesdites deux ailes (21) dudit moyen de positionnement (20) viennent se loger dans ladite gorge (2) à l'étape b) après s'être déformées radialement lors dudit coulissement, alors que ladite âme est montée radialement à l'extérieur de l'embout femelle, et **en ce que** l'on vient emboîter à l'étape b) des excroissances internes et en regard que présentent respectivement lesdites ailes dans des épaulements inférieurs desdites lumières (12), pour s'opposer à la déformation radialement vers l'extérieur de ces ailes.

14. Procédé selon la revendication 12 ou 13, **caractérisé en ce que** l'on met en oeuvre l'étape c) en exerçant ladite poussée sur deux surfaces d'appui (32) formées en des extrémités supérieures de manoeuvre dudit organe de verrouillage (30), qui sont diamétralement opposées et qui s'étendent perpendiculairement à l'axe de symétrie (X) dudit organe de verrouillage, et **en ce que** l'on recouvre sélectivement à l'étape c) lesdites ailes (21) par deux pattes axiales (31) diamétralement opposées formant des extrémités inférieures de verrouillage dudit organe qui sont opposées auxdites extrémités de manoeuvre (32).

15. Procédé selon une des revendications 12 à 14, **caractérisé en ce que** l'on démonte le dispositif de raccordement (3) essentiellement en mettant en oeuvre les étapes ultérieures suivantes :
d) on exerce une traction sur ledit organe de verrouillage (30) pour le faire passer de ladite position verrouillée à ladite position non verrouillée, puis
e) on déloge ledit moyen de positionnement (20) de ladite gorge (2) par un coulissement relatif de l'embout mâle (1) à l'intérieur de l'embout femelle (10), autorisé par la liberté de déformation radialement vers l'extérieur dudit moyen de positionnement obtenue à l'étape d).

## Claims

1. Connector device (3, 103) for a fluid transfer line, in particular at low pressure, comprising:
- a female fitting (10, 110), which is designed to receive in a sealed arrangement a male fitting (1, 101) having a peripheral connecting groove (2) and which has at least one traversing port (12),
- a deformable positioning means (20) which is designed to be mounted on the female fitting through the or each port and which is able to be positioned so that it sits in the groove so as to axially position the male fitting inside the female fitting, and
- an element (30, 130) for locking said means in the groove which is able to be mounted so that it moves in translation around the female fitting switching reversibly from an unlocked position in which said means is free to deform radially towards the exterior of the groove to a locked position in which said element is disposed at least partially facing said means so that it opposes any deformation of the latter radially towards the exterior of the groove,
**characterised in that** said positioning means comprises a U-shaped pin with two deformable wings (21) which respectively form two traversing portions designed to traverse a pair of said diametrically opposite ports and which are linked to one another by a web (22) designed to be mounted radially on the exterior of the female fitting, and **in that** said locking element covers said wings in the locked position by closing these ports.

2. Device (3, 103) as claimed in claim 1, **characterised in that** said locking element (30, 130) comprises one or more axial lock end(s) (31) which is (are) designed respectively to cover said wings (21) in said locked position.

3. Device (3, 103) as claimed in claim 2, **characterised in that** said locking element (30, 130) is formed by a sleeve, which is designed to radially enclose the female fitting (10, 110) and which comprises at least one manoeuvring end (32, 132, 132a) axially opposite said or each lock end (31) to make said element slide reversibly around the female fitting, said element preferably having two diametrically opposite support surfaces formed by these manoeuvring ends which extend perpendicular to the axis of symmetry (X) of this element.

4. Device (3, 103) as claimed in claim 3, **characterised in that** said sleeve (30) is provided with a plurality of lugs protruding out from the radially inner face of said or each lock end designed to prevent said or each traversing portion (21) of said positioning means (20) from being covered by this sleeve when said means is positioned outside said groove (2).

5. Device (3, 103) as claimed in one of the preceding claims, **characterised in that** each of said wings (21) has a protuberance disposed on its internal face facing the other wing, designed to nest in the corresponding arcuate port (12) by means of at least a lower shoulder disposed on the latter so as to form a blocking key for the wings in said groove (2) opposing a translating movement of each wing in the direction of its length, said pin being preferably made from plastic material.

6. Device (3, 103) as claimed in one of the preceding claims, **characterised in that** said locking element (30) comprises two diametrically opposite lock ends (31) and respectively consisting of two axial tabs designed to be positioned against said wings (21) of the pin (20) and substantially forming slots with the adjacent contour (31 a) of said element.

7. Device (3, 103) as claimed in one of the preceding claims, **characterised in that** said locking element (30, 130) is designed to be mounted so that it is immobile in rotation around the female fitting (10, 110) in said locked position.

8. Device (3, 103) as claimed in one of the preceding claims, **characterised in that** the female fitting (10, 110) comprises two branch connectors (14), preferably in the shape of fir tree branches, which extend on either side of a central support surface (15, 115) of the female fitting with a view to manoeuvring it and perpendicular to the axis of symmetry (X) of this fitting, two support surfaces (32, 132, 132a) constituting manoeuvring ends of said locking element (30, 130) preferably being connected to one another by two axial notches (33) respectively designed to be located underneath said two connectors (14) of the female fitting, in said unlocked and locked positions.

9. Device (3, 103) as claimed in one of the preceding claims, **characterised in that** it also incorporates the male fitting (1, 101) in the groove (2) of which said positioning means (20) is mounted, said groove being delimited by a frustoconical chamfer (4) which connects to one another an axially lower cylindrical portion (5) and an axially upper cylindrical portion (6) with a maximum diameter for the male fitting.

10. Connector device as claimed in one of the preceding claims.
**characterised in that** the locking element (130) further incorporates a visual lock indicator (137) which is respectively visible and invisible on the female fitting (110) in the unlocked and locked positions and which preferably comprises at least one axial pin (137) formed by a single integral piece of the locking element and displaceable in translation inside a housing (115a) of the female fitting opening onto a support surface (115) of this fitting.

11. Fuel injector circuit comprising a tubular male fitting (1) and a connector device (3) connecting it to a tubular female fitting (10) of this device, **characterised in that** the device is as defined in one of the preceding claims.

12. Method of fitting/ dismantling a connector device (3) as claimed in one of claims 1 to 10 around a tubular male fitting (1) to be connected to a tubular female fitting (10) of this device via a connecting groove (2) formed in this male fitting, **characterised in that** it comprises the following successive steps for fitting the device:
a) said locking element (30) and then the pin constituting said positioning means (20) are fitted around the female fitting so that this means traverses said ports (12) of the female fitting,
b) the male fitting is inserted into the female fitting thus equipped with the connector device so that said means deforms radially as it slides relative onto the male fitting so that it comes to be housed in the groove, said locking element occupying said unlocked position in which said means is free to deform radially towards the exterior of the groove during this sliding movement, after which
c) a pushing movement is applied to said element so that it occupies said locked position in which it at least partially covers said means by closing said ports and thus opposing any deformation of the latter radially towards the exterior of the groove.

13. Method as claimed in claim 12, **characterised in that** said two wings (21) of said positioning means (20) come to be seated in said groove (2) at step b) after being radially deformed during said sliding movement, whilst said web is mounted radially on the exterior of the female fitting, and **in that** internal facing protuberances provided respectively on said wings nest in lower shoulders of said ports (12) in order to oppose the deformation of these wings radially towards the exterior.

14. Method as claimed in claim 12 or 13, **characterised in that** step c) is implemented by said pushing action applied to two support surfaces (32) formed at upper manoeuvring ends of said locking element (30) which are diametrically opposite and which extend perpendicular to the axis of symmetry (X) of said locking element, and **in that** said wings (21) are selectively covered at step c) by two diametrically opposite axial tabs (31) forming lower lock ends of said element which are disposed opposite said manoeuvring ends (32).

15. Method as claimed in one of claims 12 to 14, **characterised in that** the connector device (3) is dismantled essentially by implementing the following subsequent steps:
d) said locking element (30) is pulled, to switch it from said locked position to said unlocked position, and then
e) said positioning means (20) is unseated from said groove (2) by a relative sliding movement of the male fitting (1) inside the female fitting (10), allowed by the freedom of said positioning means to deform radially towards the exterior obtained at step d).

## Patentansprüche

1. Vorrichtung zur Verbindung (3, 103) für eine Fluidtransferleitung insbesondere bei niedrigem Druck, umfassend:
- ein weibliches Ansatzstück (10, 110), welches dazu bestimmt ist, in abgedichteter Weise ein männliches Ansatzstück (1, 101) zu empfangen, welches einen peripheren Hals zum Verbinden (2) aufweist und welches mindestens eine quer liegende Öffnung (12) aufweist,
- ein deformierbares Positioniermittel (20), welches eingerichtet ist, auf dem weiblichen Ansatzstück über die oder über jede Öffnung angebracht zu werden und welches ausgelegt ist, dazu zu gelangen, in dem Hals in einer Weise beherbergt zu sein, dass es axial das männliche Ansatzstück im Inneren des weiblichen Ansatzstücks positioniert, und
- ein Verriegelungsorgan (30, 130) des Mittels in dem Hals, welches geeignet ist, in Translation beweglich um das weibliche Ansatzstück angebracht zu werden, wobei es sich reversibel von einer nicht verriegelten Position, in welcher das Mittel frei ist, sich zu dem Äußeren des Halses hin radial zu deformieren, zu einer verriegelten Position, in welcher sich das Organ zumindest teilweise gegenüberliegend zu dem Mittel in einer Weise wiederfindet, dass es sich der radialen Deformierung zu dem Äußeren des Halses hin widersetzt, bewegt, **dadurch gekennzeichnet, dass** das Positionierungsmittel aus einer U-förmigen Nadel gebildet ist, welche zwei deformierbare Flügel (21) aufweist, welche zwei jeweilige Querabschnitte bilden, welche geeignet sind, ein Paar der diametral gegenüberliegenden Öffnungen zu überqueren und welche miteinander durch einen Steg (22) verbunden sind, welcher bestimmt ist, radial am Äußeren des weiblichen Ansatzstücks angebracht zu werden, und dass das Verriegelungsorgan die Flügel in der verriegelten Position unter Verschließung der Öffnungen wieder bedeckt hat.

2. Vorrichtung (3, 103) gemäß Anspruch 1, **dadurch gekennzeichnet, dass** das Verrieglungsorgan (30, 130) ein oder mehrere axiale Verriegelungsextremitäten (31) umfasst, welche jeweils ausgestaltet sind, die Flügel (219) in der verriegelten Position wieder zu bedecken.

3. Vorrichtung (3, 103) gemäß Anspruch 2, **dadurch gekennzeichnet, dass** das Verriegelungsorgan (30, 130) aus einem Stutzen gebildet ist, welcher dazu bestimmt ist, das weibliche Ansatzstück (10, 110) radial einzuschließen und welche mindestens eine Betätigungsextremität (32, 132, 132a) umfasst, welche der oder jeder Verriegelungsextremität (31) axial gegenüberliegt, um zu bewirken, dass das Organ reversibel um das weibliche Ansatzstück gleitet, wobei das Organ bevorzugt zwei diametral gegenüberliegende Auflageoberflächen umfasst, welche durch die Betätigungsextremitäten gebildet sind und welche sich senkrecht zu der Symmetrieachse (X) des Organs erstrecken.

4. Vorrichtung (3, 103) gemäß Anspruch 3, **dadurch gekennzeichnet, dass** der Stutzen (30) ausgehend auf der radial innen liegenden Seite des oder jeder Verriegelungsextremität mit einer Vielzahl von Kontakten versehen ist, welche ausgestaltet sind, die Wiederbedeckung durch den Stutzen der oder jedes Transversalabschnitts (21) des Positionierungsmittels zu unterbinden, falls das letztere außerhalb des Halses (2) positioniert ist.

5. Vorrichtung (3, 103) gemäß einem der vorhergehenden Ansprüche, **dadurch gekennzeichnet, dass** jeder der Flügel (21) auf seiner inneren Seite, welche dem anderen Flügel gegenüberliegt, eine Ausbuchtung aufweist, welche eingerichtet ist, in die entsprechende Öffnung (12) kreisbogenförmig durch mindestens eine untere Ausschulterung, welche die letztere aufweist, in einer Weise einzugreifen, einen Blockierkeil der Flügel in dem Hals (2) zu bilden, welcher sich einer Verschiebung jedes Flügels in seiner Längsrichtung widersetzt, wobei die Nadel bevorzugt aus einem Kunststoffmaterial ist.

6. Vorrichtung (3, 103) gemäß einem der vorhergehenden Ansprüche, **dadurch gekennzeichnet, dass** das Verriegelungsorgan (30, 130) zwei einander diametral gegenüberliegende Verriegelungsextremitäten (31) aufweist, welche durch zwei axiale Klauen gebildet sind, welche dazu bestimmt sind, gegen die Flügel (21) der Nadel (20) positioniert zu werden und im Wesentlichen Lücken mit einer Kontur benachbart (31a) zu dem Organ zu bilden.

7. Vorrichtung (3, 103) gemäß einem der vorhergehenden Ansprüche, **dadurch gekennzeichnet, dass** das Verriegelungsorgan (30, 130) ausgelegt ist, rotationsunbeweglich in der verriegelten Position um das weibliche Ansatzstück (10, 110) angebracht zu werden.

8. Vorrichtung (3, 103) gemäß einem der vorhergehenden Ansprüche, **dadurch gekennzeichnet, dass** das weibliche Ansatzstück (10, 110) zwei Verzweigungsanschlüsse (14), bevorzugt in Form von Tannenstielen, welche sich auf beiden Seiten einer zentralen Auflagefläche (15, 115) des weiblichen Ansatzstücks in Hinblick auf seine Betätigung und senkrecht zu der Symmetrieachse (X) dieses Ansatzstücks erstrecken, und zwei Auflageoberflächen (32, 132, 132a), welche Betätigungsextremitäten des Verriegelungsorgans (30, 130) bilden, welche bevorzugt miteinander durch zwei axiale Nuten (33) verbunden sind, welche jeweils dazu bestimmt sind, sich unterhalb der zwei Anschlüsse (14) des weiblichen Ansatzstücks in den nicht verriegelten und verriegelten Positionen zu finden, umfasst.

9. Vorrichtung (3, 103) gemäß einem der vorhergehenden Ansprüche, **dadurch gekennzeichnet, dass** sie zudem das männliche Ansatzstück (1, 101) in dem Hals (2) beinhaltet, an dem das Positionierungsmittel (20) angebracht ist, wobei der Hals durch eine kegelstumpfartige Abschrägung (4) beschränkt ist, welche axial zwischen sich einen axial unteren zylindrischen Abschnitt (5) mit einem axial oberen zylindrischen Abschnitt (6) eines maximalen Durchmessers für das männliche Ansatzstück verbindet.

10. Vorrichtung zur Verbindung gemäß einem der vorhergehenden Ansprüche, **dadurch gekennzeichnet, dass** das Verriegelungsorgan (130) zudem einen sichtbaren Zeugen der Verriegelung (137) beinhaltet, welcher jeweils sichtbar bzw. unsichtbar in der nicht verriegelten bzw. verriegelten Position auf dem weiblichen Ansatzstück (110) ist und welcher bevorzugt mindestens eine axiale Figur (137) umfasst, welche aus einem einzigen Anhänger mit dem Verriegelungsorgan und translationsbeweglich im Inneren einer Beherbergung (115a) des weiblichen Ansatzstückes mündend auf eine Auflageoberfläche (115) dieses Ansatzstücks gebildet ist.

11. Kraftstoffeinspritzkreis umfassend ein rohrförmiges männliches Ansatzstück (1) und eine Verriegelungsvorrichtung (3) zum Verriegeln mit einem rohrförmigen weiblichen Ansatzstück (10) der Vorrichtung, **dadurch gekennzeichnet, dass** die Vorrichtung wie in einem der vorhergehenden Ansprüche ist.

12. Verfahren zum Montieren/Demontieren einer Verbindungsvorrichtung (3) gemäß einem der Ansprüche 1-10 um ein rohrförmiges männliches Anschlussstück (1), welches mit einem rohrförmigen weiblichen Ansatzstück (10) dieser Vorrichtung über einen Verbindungshals (2), welcher in dem männlichen Ansatzstück ausgebildet ist, zu verbinden ist, **dadurch gekennzeichnet, dass** es die folgenden aufeinanderfolgenden Schritte für die Montage der Vorrichtung umfasst:
a) Das Verriegelungsorgan (30) wird gefolgt von der das Positionierungsmittel (20) bildenden Nadel um das weibliche Ansatzstück in einer Weise angebracht, dass das Mittel die Öffnungen (12) des weiblichen Ansatzstücks überquert,
(b) Das männliche Ansatzstück wird in das so ausgerüstete weibliche Ansatzstück der Verbindungsvorrichtung in einer Weise eingesetzt, dass sich das Mittel radial im Verlauf seines Gleitens relativ zu dem männlichen Ansatzstück deformiert, um dahin zu gelangen, in dem Hals beherbergt zu sein, wobei das Verriegelungsorgan während diesem Gleiten die nicht verriegelte Position einnimmt, in welcher das Mittel frei ist, sich radial zu dem Äußeren des Halses hin zu verformen und dann,
c) Ein Druck wird auf das Organ ausgeübt in einer Weise, dass es die verriegelte Position einnimmt, in welcher es zumindest teilweise das Mittel wieder bedeckt, indem es die Öffnungen verschließt und sich so der Deformation des letzteren radial zu dem Äußeren des Halses hin widersetzt.

13. Verfahren gemäß Anspruch 12, **dadurch gekennzeichnet, dass** die zwei Flügel (21) des Positionierungsmittels (20) dazu gelangen, in dem Hals (2) in dem Schritt b) beherbergt zu sein, nachdem sie radial während des Gleitens deformiert werden, während der Steg radial am Äußeren des weiblichen Ansatzstücks angebracht wird, und das in Schritt b) die internen Ausbuchtungen in Eingriff gelangen und gegenüberstehend dessen, was jeweils die Flügel in den unteren Ausschulterungen der Öffnungen (12) aufweisen, um sich der Deformation dieser Flügel radial nach außen hin entgegenzustellen.

14. Verfahren gemäß Anspruch 12 oder 13, **dadurch gekennzeichnet, dass** der Schritt c) bewerkstelligt wird, indem der Druck auf zwei Auflageoberflächen (32) ausgeübt wird, welche an den oberen Betätigungsextremitäten des Verriegelungsorgans (30) ausgebildet sind, welche diametral gegenüberliegend sind und welche sich senkrecht zu der Symmetrieachse (X) des Verriegelungsorgans erstrecken und das in Schritt c) selektiv die Flügel (21) durch zwei diametral gegenüberliegende axiale Klauen (31) wieder bedeckt werden, welche untere Verriegelungsextremitäten des Organs bilden, welche den Betätigungsextremitäten (32) gegenüberliegen.

15. Verfahren gemäß einem der Ansprüche 12 bis 14, **dadurch gekennzeichnet, dass** die Verbindungsvorrichtung (3) demontiert wird, indem im Wesentlichen die folgenden weiteren Schritte bewerkstelligt werden:
d) Ein Zug wird auf das Verriegelungsorgan (30) ausgeübt,um zu bewirken, dass es von der verriegelten Position in die nicht verriegelte Position übergeht, und dann
e) Das Positionierungsmittel (20) wird durch ein Gleiten relativ zu dem männlichen Ansatzstück (1) im Inneren des weiblichen Ansatzstücks (10) aus dem Hals (2) herausbewegt, was durch die Freiheit der radialen Deformation des Positionierungsmittels nach außen ermöglicht wird, welche in Schritt d) erhalten wurde.
